# EUROPEAN PATENT SPECIFICATION

(11) **EP 2 755 532 B1**
(45) Date of publication and mention of the grant of the patent: **03.02.2016**
(21) Application number: 12766140.3
(22) Date of filing: 13.09.2012
(51) Int. Cl.: A47J 27/18, A47J 27/00, A47J 27/08

(54) **FOOD HEATING APPARATUS**
VORRICHTUNG ZUM ERWÄRMEN VON SPEISEN
APPAREIL DE CHAUFFAGE D'ALIMENTS

(30) Priority: 16.09.2011 GB 201116072
(43) Date of publication of application: 23.07.2014
(73) Proprietor: Clyne Energy Limited, Swansea, West Glamorgan SA3 5EQ (GB)
(72) Inventor: BOARD, Alun, Swansea SA3 5DD (GB); BOARD, Kenneth, Swansea SA3 5EQ (GB)
(74) Representative: Baker, Thomas Edward
(86) International application number: PCT/GB2012/052262
(87) International publication number: WO 2013/038186

(56) References cited:
- WO-A2-2010/094941
- FR-A1- 2 928 254
- US-A- 5 586 487

## Description

The present invention relates to a food heating arrangement, and in particular an arrangement having a liquid distributing rotary device for enabling the heating and/or cooking of food such as, for example vegetables meats, fish and eggs including the use of the Sous Vide process.

In general, foods such as vegetables are cooked using a conventional saucepan on a cooker ring. The food is inserted within the saucepan which is filled with water. The water is heated until it boils and the temperature of the water is sustained for the required time until the foodstuff is cooked. The cooked food is then removed from the saucepan and the water is disposed of. A large proportion of water is heated to enable the foodstuff to be cooked and a large amount of energy is required to heat the water.

In European patent application number 08806477.9 the foodstuff is positioned within a food receiving receptacle and is located within the housing, and a liquid distribution arrangement directs the liquid to flow over the side of the food receiving receptacle, raising the heated liquid from a reservoir at the base of the housing to a percolation element arranged above the foodstuff. The resulting water droplets of the spray come into contact with the foodstuff and give up their energy to the foodstuff. The water droplets become cooled and the cooled water returns to the reservoir to be re-heated and re-circulated. This enables the use of water volumes well below the volume of the foodstuff, therefore the system is highly energy efficient compared to the conventional saucepan arrangement.

WO2010/094941 discloses a food heating system comprising a container within which the food is to be heated. A heater is provided for heating either or both of the food present in the container of a fluid heating medium present in the container. The heater means is controlled so as to not raise the temperature of the fluid heating medium to the boiling point of a liquid present in the container. Heated liquid is percolated through a flat circular percolation plate having a plurality of percolation apertures therein from above the food and contacts the food to be heated. The liquid then passes through the aperture in a base plate 12 and into the liquid reservoir defined in the container for recirculation. While the systems described above are effective in providing the means to cook food there is a constant drive to reduce the amount of time and energy to achieve the end result. For example, the percolation technique may not distribute the water evenly over the food stored in the housing, causing the food to be cooked at different rates. As a result the water may need to be re-heated and re-circulated for longer than desired.

It is therefore desirable to provide an improved cooking device for cooking food that enables the amount of liquid required to cook the food to be minimised and to improve the distribution of liquid over the foodstuff so as to address the above described problems and/or which offers improvements generally.

According to the present invention there is provided a food heating arrangement as described in the accompanying claims.

In accordance with a first aspect of the present invention there is provided a food heating apparatus as defined in claim 1.

Preferably the liquid reservoir, the liquid distributing rotary device and the foodstuff receiving zone are positioned within a housing.

Desirably the foodstuff receiving zone is spaced apart from the liquid reservoir so as to permit control of the cooking of the foodstuff and prevent the necessity to cover the foodstuff with liquid e.g. water.

Preferably the liquid that is directed towards the foodstuff receiving zone comes into contact with the surface of the foodstuff positioned within the foodstuff receiving zone so as to enable transfer of energy between the liquid and the foodstuff.

Beneficially, the liquid reservoir is shaped to optimise the contact of liquid with the foodstuff so as to ensure even cooking of the foodstuff and to minimise the quantity of liquid e.g. water needed to cook the foodstuff.

Preferably, a protective guard is arranged around at least part of the peripheral edge of the liquid distributing rotary device so as to direct the liquid released from the liquid distributing rotary device.

Beneficially, the liquid distributing rotary device is a wheel rotatable about a central hub and the wheel is arranged such that at least part of the wheel lies beneath the surface of the liquid contained in the liquid reservoir. The wheel can be rotated by a motor which is magnetically coupled to the wheel or alternatively the motor can be mechanically coupled to the wheel. In one embodiment the wheel comprises a disc having at least one fin arranged to enable collection of liquid from the liquid reservoir.

Preferably, the at least one fin is connected to the disc by a stub portion and the fin is arranged to be bent in two spaced apart longitudinal locations so as to form a first and second opposing portion with a connecting portion there between, the fin being bent at a further position at the base of the first opposing portion such that one edge of the fin substantially faces one side of the plane of the disc.

Desirably, the relative angles between the first opposing portion of the fin, the connecting portion of the fin and the second opposing portion of the fin have been determined so as to provide optimal scatter of the liquid over the foodstuff.

Preferably, wherein eight equally spaced fins are arranged around the outer periphery of the disc of the wheel.

Alternatively, the wheel comprises a roller having at least one fin arranged to enable collection of liquid from the reservoir.

Alternatively, the liquid distributing rotary device is a roller comprising a central cylindrical core which has at least one fin, or paddle extending in an outwards direction from the surface of the cylinder. This causes the liquid to be released in a direction parallel to the plane of rotation of the roller and the roller is positioned so that at least part of the roller lies beneath the surface of the liquid contained in the liquid reservoir.

Preferably, at least one electric heating element to heat the liquid held in the liquid reservoir prior to distribution of the liquid and a controller is arranged to control the at least one electric heating element. A thermocouple is placed in contact with the liquid held within the liquid reservoir so as to provide temperature feedback to the controller. This arrangement allows suitable control of the temperature of the liquid contained within the liquid reservoir.

Desirably, the housing is sealed so as to permit control of the pressure within the housing.

Preferably the housing is placed within an outer unit, wherein the housing and outer unit are separated by insulation material so that even when the heating has occurred and the temperature within the food heating apparatus has increased, the external outer unit still remains at a touch safe temperature.

Beneficially, a drain hole passes through the side of the housing and the outer unit and is terminated by a tap positioned on the external side of the outer unit so as to allow the food heating apparatus to be emptied safely.

Preferably when the food heating apparatus is in use, the outer unit and housing are covered by a pivotable lid so as to seal the apparatus allowing the pressure internal to the apparatus to increase and be controlled as desired.

Also according to the present invention there is a method of heating foodstuff as defined in claim 15.

The method may also be defined as a method of heating foodstuff comprising:
displacing liquid from a first position within a liquid reservoir to a second position external to the liquid reservoir by means of a liquid distributing rotary device;
and directing the displaced liquid towards a foodstuff receiving zone once the second position has been reached.

Preferably, the liquid is heated prior to any liquid being displaced by the liquid distributing rotary device and the liquid that is directed towards the foodstuff receiving zone comes into contact with the foodstuff positioned within the foodstuff receiving zone, wherein after making contact with the foodstuff, the liquid is returned to the liquid reservoir.

Beneficially, as the liquid is released from the liquid distributing rotary device droplets of the liquid are produced so as to form a spray, wherein formation of the droplets of liquid further causes the production of steam or liquid vapour. The steam or water droplets are agitated by the rotary motion of the liquid distributing rotary device so as to direct the steam or liquid vapour towards the foodstuff receiving zone and the steam or liquid vapour directed towards the foodstuff receiving zone comes into contact with the surface of the foodstuff contained within the food receiving zone.

Preferably, wherein the steam or liquid vapour is agitated so as to cause it to come into contact with the surface of the foodstuff and the agitation of the steam or liquid is provided by the rotation of the liquid distributing rotary device.

Desirably, the liquid in the liquid reservoir is heated prior to any liquid being displaced by the liquid distributing rotary device.

The present invention will now be described by way of example only with reference to the following illustrative figures in which:
Figure 1 is a schematic illustration of a first embodiment of a cooking arrangement according to the invention.
Figure 2 is a schematic of the first embodiment of the liquid distributing rotary device.
Figure 3 is a perspective view of a first embodiment of the liquid distributing rotary device and the shield.
Figure 4 is a perspective view of the inside of the inner housing.
Figure 5 is a schematic of the second embodiment of the liquid distributing rotary device.
Figure 6 of the magnetic coupling between the motor and the liquid distributing.
Figure 7 a and b shows the arrangement of the primary and secondary heater elements.

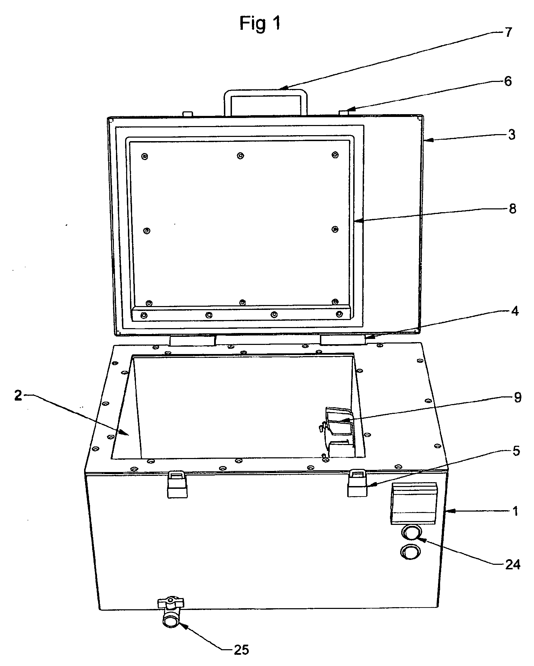

Referring to Figure 1 of the drawings, there is shown an outer unit 1 having an inner housing or housing 2 having a food receiving zone 4 in which foodstuff is placed and a trough which is positioned along one side of the base of the inner housing (not shown) and having a width parallel to the front and back of the inner housing. The trough forms a liquid reservoir for containing the liquid required to cook the foodstuff which is to be heated. The area of the base adjacent to the reservoir (not shown) enables water to drain back to the reservoir and this area is slightly inclined to aid the return of the water to the reservoir. The reservoir is shaped so as to provide optimal coverage of the foodstuff by the liquid contained within the reservoir e.g. water i.e. it optimises the contact of the liquid with the foodstuff. The outer unit 1 and inner housing 2 are separated by insulation material (not shown) to enable the outer edge of the outer unit to be cool to touch when the food heating apparatus is in use. The term foodstuff covers the usual interpretation of the food which is to be eaten or may alternatively be interpreted as the food which is to be eaten and its packaging, e.g. food contained in air tight plastic bags used in the Sous Vide method of cooking.

A lid 3 is positioned at the top of the outer unit 1 and is pivotably movable between a closed position and an open position by hinges 4 arranged at the outer back edge of the outer unit In the open position the lid is held open by a bracket integral with the lid hinges (not shown). In the closed position the lid is held closed by a pair of catches 5 positioned at the front of the outer unit 1, whereby the catches 5 are fitted around a hook 6 formed on the front side edge of the lid 3. The lid 3 includes a handle 7 positioned on its front side edge so as to aid the opening and closing of the lid. The lid 3 is insulated and is placed in the secured closed position during operation. A seal 8 is also arranged around part of the lid 3 so as to mate with the perimeter of the opening of the inner housing 2 so as to prevent the extrusion of steam from the inner housing 2 when the food heating arrangement is in use.

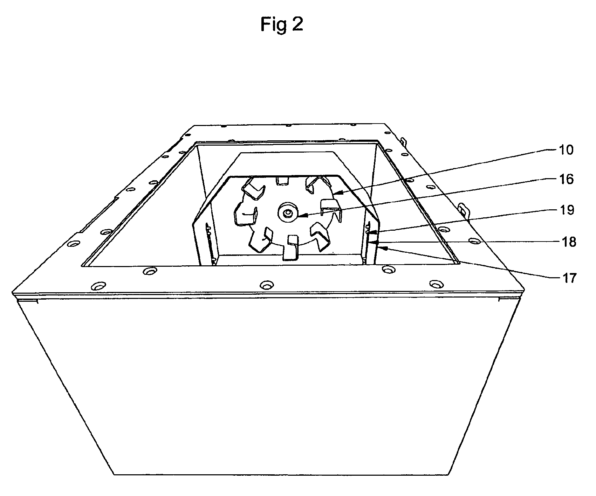

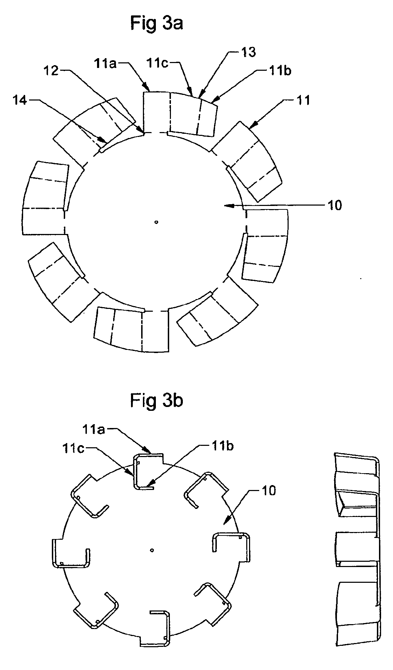

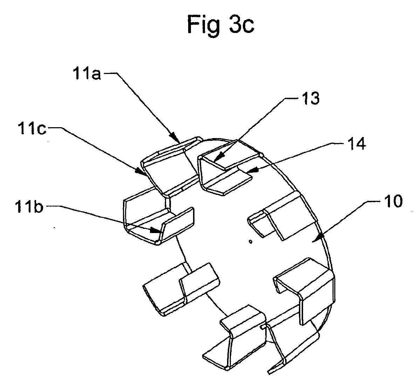

A liquid distributing rotary device, e.g a wheel structure, for example a water wheel, as shown in Figure 2 and figure 3, is rotatably mounted to the right hand internal side wall of the inner housing 2.

The wheel 9 is positioned within the inner housing 2 such that the fin 11 in the lower most position is arranged to permit the surface level of the liquid reservoir to reach up to approximately 2/3 of the height of the connecting portion 13c of the fin 11.

The wheel 9 is formed of a vertical disc 10 (or hub) with eight flag like fin members 11 connected by a stub portion 12 and arranged around the peripheral edge of the disc 10. The flag like fin members 11 have a curved upper edge 13, which corresponds to the furthest edge from the periphery of the disc 10, and a straight lower edge 14 which extends substantially parallel to the longitudinal axis of the stub portion 12. The lower straight edge is near to, but not in contact with the outer periphery of the disc 10.

The fin 11 is arranged to enable collection of liquid from the liquid reservoir, displacement of the liquid from a first position below the surface of the liquid within the liquid reservoir to a second position above the surface of the liquid within the liquid reservoir and finally the liquid is released from the fin and the liquid is directed over the foodstuff contained in a foodstuff receiving zone which is raised above the base of the inner housing and is therefore spaced apart from the liquid reservoir. At no point is the foodstuff in contact with the liquid when it is positioned within the liquid reservoir. Therefore the liquid distributing rotary device is arranged to displace liquid from the liquid reservoir and direct the displaced liquid towards the foodstuff receiving zone. The liquid that is directed towards the foodstuff receiving zone comes into contact with the surface of the foodstuff positioned within the foodstuff receiving zone.

The fin 11 is bent at two spaced apart longitudinal locations along the longitudinal length of the fin 11 so as to form two opposing sides 13a, 13b with a connecting side 13c there between. The first of the opposing sides 13a has a length which is longer than the second opposing side 13b. The fin 11 is further bent at a point near to the base of the connecting stub 12 between the fin 11 and the disc 10, such that the lower edge of the fin 11 substantially faces at least one planar side of the disc 10. The connecting side 13c extends from a region close to the peripheral edge of the disc 10 to a region of the disc 10 which is closer to the axis of rotation of the disc where the connecting side is terminated by the second shorter opposing edge 13b of the fin 11. Each side face of the fin 11 is aligned substantially perpendicular to the plane of the disc 10.

The angles between the first opposing portion 13a of the fin, the connecting portion 13c of the fin and the second opposing portion 13b of the fin have been determined iteratively so as to provide the optimum scatter of water over the foodstuff (which is positioned in the inner housing) on rotation of the wheel 9. Further the curvature of the upper edge 13 of the fin 11. has been carefully selected with the optimal scatter in mind. The optimum angles are 83° between the plane of the disc 10 and the first opposing side 13a, 90°between the first opposing side 13a and the connecting portion 13c and 90° between the connecting portion 13c and the second opposing side 13b. Other optimal dimensions are displayed in Figure 3. For example, the length that extends from the outer circumference of the disc 10 and the inner edge of the fin 14 is 3.11 mm, whereby the bend of the fin is applied in line with the lower edge of the fin. The height of the fin which forms the first opposing side 13a of the fin is 33.29 mm.

The wheel 9 is driven by a motor which is mechanically coupled to the wheel. The electronic control elements for the wheel are contained in a compartment to the right external to the inner housing, and within the outer unit, adjacent to the inner wall supporting the wheel 9. Figure 2 shows that the wheel 9 is held in position by an easy to remove thumbscrew 16, to enable ease of removal of the wheel 9 when it is desirable to clean the wheel by hand or in a dishwasher.

A protective guard 17, as shown in Figure 3, is arranged around the peripheral edge of the wheel 9 so as to provide some directionality for the scattered water as well as physical protection for the wheel 9. The guard 17 has 5 distinct sides, the first side 17a runs parallel with the back wall of the inner housing 2, a second side 17b opposes the first side and runs parallel with the front wall of the inner housing 2 and a third side 17c runs parallel with the lid 3 in the closed position. Two further sides 17d, 17e extend between the first side 17a and the third side 17c and the third side 17c and the second side 17b accordingly. The first and second sides 17a, 17b include a slot 18 that is used to secure the guide 17 into position by placing the slot over a protrusion or pin 19 arranged on the inner side of the inner front and back wall of the inner housing 2 and arranged close to the wheel arrangement 9.

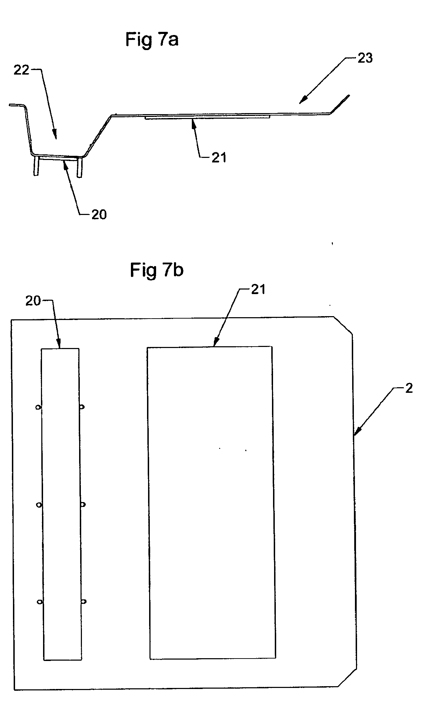

As shown in Figure 7, an electric heating element 20 is fixed to the underside of the inner housing 2 at the base of the water reservoir 22 and is controlled by the Proportional Integral Derivative controller (PID controller) (not shown) situated in the top right corner of the outer unit. A thermocouple (not shown) is placed under the surface of the water contained within the liquid reservoir 2 such that it is in contact with the water so as to provide the temperature feedback necessary for the PID controller to operate. The control loop is set to its optimum settings for the system being controlled and the desired temperature is set manually using the button located on the front panel of the outer unit. Further, to improve the efficiency of the cooking device an independently controlled second electric heating element 21 is placed under the drainage area 23 where the water drains back to the main reservoir. The second heater element 21 encompasses a large proportion of this area in order to heat the thin film of water flowing back from the food into the trough of the main liquid reservoir 22.

The wheel 9 is controlled independently from the PID controller by a switch 24 positioned on the front outer panel of the outer unit 1.

A drain hole (not shown) runs through the inner housing 2 and outer unit 1 and is terminated at the outer edge of the outer unit by a tap 25. The drain hole and tap 25 are used to drain off the liquid used to cook the foodstuff. This allows the inner housing 2 to be emptied as and when required with ease.

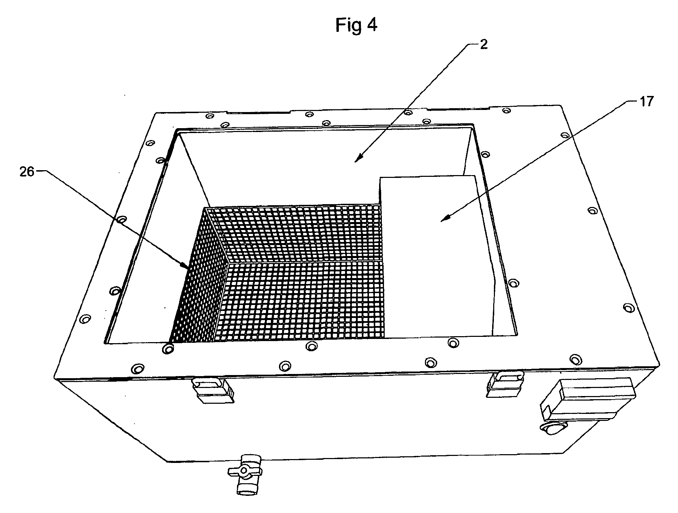

A food receiving receptacle 26 which defines the food receiving zone is positioned within the inner housing 2 as shown in figure 4. This food receiving receptacle 26 is a wire basket and can be easily removed from the inner housing 2 before and after the foodstuff is cooked. The holes in the structure of the wire basket permit the passage of water droplets and steam so that the liquid and resulting steam/liquid vapour may come into contact with the surface of the foodstuff without being obstructed. The use of the wire basket also allows the foodstuff to be suspended above the water reservoir 22 and the drainage area 23 such that cooking only occurs with contact of the water droplets and/or steam/ water vapour provided by the rotation of the wheel 9. Therefore there is no contact between the foodstuff and the liquid in the liquid reservoir prior to the distribution of liquid by the liquid distributing rotary device i.e. wheel.

In use, the foodstuff is placed in the food receiving zone (i.e. the wire basket 26) and water is placed in the liquid reservoir (or trough) 22, both of which are inside the inner housing 2. The water in the trough 22 is heated by the heater element 20. The liquid in the reservoir is held at a temperature below the boiling point of water of 100°C, the precise temperature being set by the user at the control interface. The dimension of the fins 11 are such that on rotation of the wheel 9 the liquid is raised from a first position to a second position e.g from the reservoir 22 to a raised height where the water is caused to exit the fin 11 at a direction substantially perpendicular to the plane of rotation of the wheel 9 so as to cause water to be scattered over the foodstuff positioned within the volume of the inner housing 2 defined by the foodstuff receiving zone.

The release of water from the fin 11 forms water droplets which collectively produces a spray to be directed towards the foodstuff receiving zone and brought into contact with the foodstuff placed within the foodstuff receiving zone. As the heated water droplets come into contact with the foodstuff they give up their energy to the foodstuff. The water droplets become cooled and the cooled water returns to the reservoir via the drainage area 23 so as to be re-heated and re-circulated by the wheel. Additional heating is also provided by the second heating element 21 which is positioned below the drainage area so as to reduce the warm up time of the water in the trough.

On releasing the water from the fin of the water wheel, the production of the water droplets leads to the production of extra amounts of steam or water vapour at the selected temperature caused by the increase in the surface area of the water when the droplets are formed.

For example, firstly consider the volume V of single sphere of water with radius R, where V= (4πR³)/3. If this volume is divided into N equal droplets, such that the sum of the volume of the N droplets is the same as the volume of the original single sphere, then the surface area of the N droplets increases.

The extra steam produced by the process of forming water droplets is agitated by the rotating action of the water wheel 9 similar in principle to the circulation of heated air by a fan in a convection oven. This extra steam, or water vapour, is caused to move by the fan effect of the rotating mechanical rotary device 9 e.g. wheel and the agitation process of the steam or water vapour carries additional energy to the foodstuff beyond that carried by the water droplets through the volume of the inner container 2 and wire rack 26 which contains the foodstuff. This process enables the cooking of every part of the surface of the foodstuff, including those areas not readily reached by the water droplets themselves. This causes the food to cook more quickly and uniformly, thereby preventing any part of the food to become overcooked.

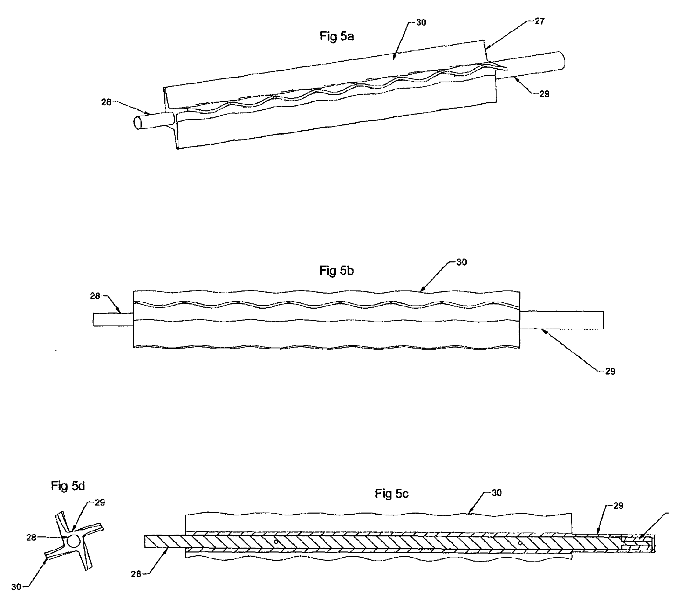

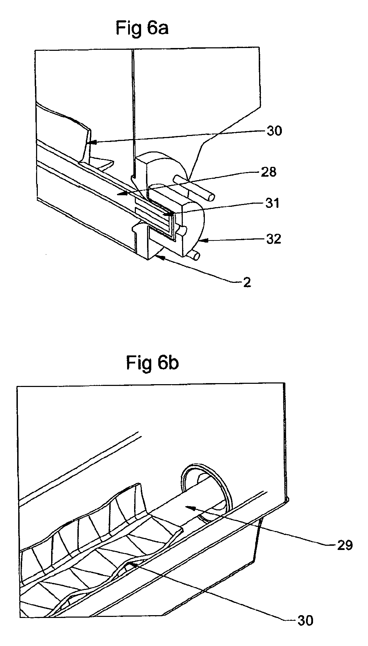

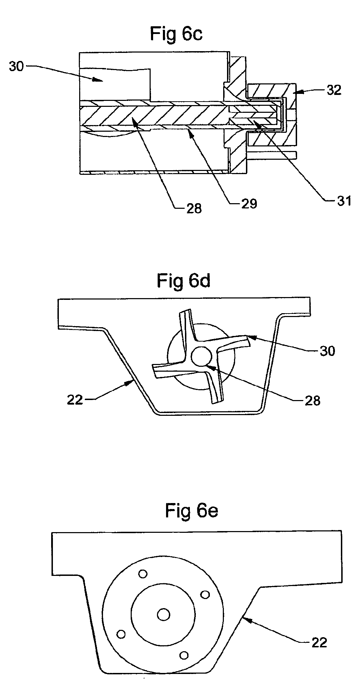

In an alternative embodiment, as shown in Figure 5, the mechanical rotary device is a roller 27 which rotates about an axle 28 (or shaft) made from stainless steel which is positioned across a length of the inner container. The rotation of the roller 27 is provided by a DC motor. The roller 27 is formed of a central cylindrical core 29 made from engineering plastic and has fins 30 (or paddles) extending in an outwards direction from the surface of the cylinder core 29. In this arrangement the liquid is also heated and the heated liquid collected from the liquid reservoir by the roller and displaced from a first position to a second position above the liquid reservoir whereby the water is directed towards the foodstuff receiving zone. However in this embodiment, the water is released in a direction parallel to the plane of rotation of the roller. As in the previous embodiment the cooled liquid is returned to the reservoir 22 (or trough) via the drainage area 23 after making contact with the foodstuff in the foodstuff receiving zone. As shown in Figures 6d and 6e, the trough (or liquid reservoir) 22 is sized so as to closely fit around the roller 27 so as to minimise the amount of water volume used. A combination of the roller position, rotational speed and trough angle can be used to direct the water spray so as to provide uniform coverage of the foodstuff surfaces.

It will be appreciated that in further embodiments various modifications to the specific arrangements described above and shown in the drawings may be made. For example, the water wheel 9 or roller 27 may be fixed to the motor using a magnetic coupling which enables the motor to drive the water wheel 9 or roller 27 so as to ensure that the water wheel 9 or roller 27 side of the assembly remains totally sealed from the motor side. Figure 6a shows the positioning of the drive magnet 32 in relation to the magnet 31 contained within the axle 28, wherein the inner housing forms a sealed structure.

The lid may be positioned at the side of the outer unit, rather than at the top and instead of being pivotably removable it could be removed such that it is a discrete component, or could be linearly removable. Alternatives to the hooks and the catches on the lid could be applied e.g. a plate with an aperture used in conjunction with a pin type protrusion. The lid of the unit can be held in an open position by an alternative means, e.g. the back edge of the lid can include a stop means and this may come into contact with a bracket which is positioned at the back of the outer unit such that the desired position of the lid is maintained.

Alternatively, the roller of the second embodiment of the liquid distributing rotary device may be configured from at least two adjacent disc structures and separated by at least one curved paddle extending from the centre of a disc structure face to the edge of the disc structure face.

The angles used to construct the fin used in combination with the wheel or the roller arrangements may be varied so as to provide optimal spray coverage of the foodstuff for varying dimensions of the housing.

The embodiment described above utilises water as the heating medium, however other forms of liquid may be used in place of the water so as to provide the same effect, e.g. stock, oil and wine may all be used to cook the foodstuff.

The guide and the fins for the wheel arrangement can alternatively be formed from separate plate pieces and may be welded or glued together, or secured together by another suitable connection means. Similarly the fins can be made separately to the disc of the wheel and may be secured as above in the case that the lower edge of the fin is arranged to come into contact with the at least one side plane of the disc.

It is noted that the position of the wheel need not be on the right hand side of the inner wall, but may instead be positioned on any of the internal side walls of the inner housing which will also cause the liquid to be distributed over the foodstuff contained in the foodstuff receiving zone.

Alternatively the reservoir (or trough) may extend over the entire base of the inner housing and the liquid drainage area may be reduced in size accordingly.

Since the lid is in a closed position and the inner housing is sealed in use, a pressure controlling means can be implemented if desired so as to increase the speed of the cooking process.

The temperature of the water is regulated to be below 100°C, however it is envisaged that temperatures above or near to 100°C could be implemented. Alternatively, the temperature may be above 100°C, but still at or below the boiling point of water if the internal pressure of the vessel is sufficiently above 1 bar.

The tap may be replaced by an alternative valve means capable of controllably passing liquid from the inside of the inner housing to the outside of the outer unit.

The heater elements may be positioned internal to the inner housing rather than under the base of the inner housing, although must be positioned within the liquid reservoir (or at the drainage area when considering the second heater element). A single or multiple heater elements can be applied. Alternatively the region of the outer unit below the trough can be made from conducting material such that the liquid in the liquid reservoir may be positioned over a hob so as to heat the liquid contained within the liquid reservoir.

In an alternative arrangement the heated water may originate from external to the outer unit and inner housing via a water distribution means i.e. a pipe or other tube arrangement.

The fins of the roller configuration of the second embodiment may be replaced by paddles.

The liquid may be raised or may be displaced longitudinally. The wheel arrangement ensures that the movement is rotational, but other forms of displacement may be envisaged.

Advantageously, the food heating arrangement includes a liquid distributing rotary device to displace liquid from a first position in the reservoir to a second position so as to cause the liquid to be directed towards foodstuff within a foodstuff receiving zone, so that heated liquid can come into contact with the foodstuff so as to heat the foodstuff. When the liquid is released from the liquid distributing rotary device steam or liquid vapour is produced as a by product of the production of droplets of liquid. A combination of the direct contact with water droplets and the agitation of the steam/water vapour by the liquid distributing rotary device cooks the foodstuff whereby the steam reaches surfaces of the foodstuff that the water droplets are unable to reach, enabling the food to cook more quickly and uniformly, thereby preventing any part of the food to become overcooked. Further a reduced amount of liquid is required to cook the foodstuff.

It should be noted that the above-mentioned embodiments illustrate rather than limit the invention, and that those skilled in the art will be capable of designing alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice versa. In a device enumerating several means, several of these means may be embodied by one and the same item of hardware. The mere fact that certain measures are recited in mutually different dependent claims does not indicate that a combination of these measures cannot be used to advantage.

## Claims

1. A food heating apparatus comprising:
a liquid reservoir (22) for containing liquid to be heated;
a liquid distributing rotary device (9,27); and
a foodstuff receiving zone (4);
**characterised in that** the liquid distributing rotary device (9,27) is arranged to displace liquid from the liquid reservoir in the form of droplets of liquid forming a spray and direct the spray towards the foodstuff receiving zone (4).

2. A food heating apparatus according to the preceding claim, wherein the liquid reservoir, the liquid distributing rotary device (9,27) and the foodstuff receiving zone are positioned within a housing (2).

3. A food heating apparatus according to claim 1 or claim 2, wherein the foodstuff receiving zone is spaced apart from the liquid reservoir.

4. A food heating apparatus according to claims 1 to 3 wherein, the liquid that is directed towards the foodstuff receiving zone comes into contact with the surface of the foodstuff positioned within the foodstuff receiving zone.

5. A food heating apparatus according to any preceding claim, wherein the liquid reservoir is shaped to optimise the contact of liquid with the foodstuff; and optionally wherein a protective guard (17) is arranged around at least part of the peripheral edge of the liquid distributing rotary device (9,27).

6. A food heating apparatus according to any preceding claim, wherein the liquid distributing rotary device is a wheel (9) rotatable about a central hub, and optionally wherein the wheel (9) is arranged such that at least part of the wheel lies beneath the surface of the liquid contained in the liquid reservoir.

7. A food heating apparatus according to claim 6, wherein the wheel is rotated by a motor which is magnetically coupled to the wheel (9), or wherein the wheel is rotated by a motor which is mechanically coupled to the wheel.

8. A food heating apparatus according to claims 6 to 7,wherein the wheel comprises a disc (10) having at least one fin (30) arranged to enable collection of liquid from the liquid reservoir.

9. A food heating apparatus according to claim 8, wherein the at least one fin is connected to the disc (10) by a stub portion (12) and the fin (30) is arranged to be bent in two spaced apart longitudinal locations so as to form a first and second opposing portion with a connecting portion there between, the fin being bent at a further position at the base of the first opposing portion such that one edge of the fin substantially faces one side of the plane of the disc, and optionally wherein the relative angles between the first opposing portions of the fin, the connecting portion of the fin and the second opposing portion of the fin have been determined so as to provide optimal scatter of the liquid over the foodstuff.

10. A food heating apparatus according to claims 8 - 9, wherein eight equally spaced fins (30) are arranged around the outer periphery of the disc of the wheel.

11. A food heating apparatus according to any of claims 6 to 10, wherein the wheel comprises a roller (27) having the at least one fin (30) arranged to enable collection of liquid from the reservoir.

12. A food heating apparatus according to claim 1, wherein the liquid distributing rotary device is a roller (27) comprising a central cylindrical core wherein at least one fin (30) extends in an outward direction from the surface of the cylindrical core; and optionally wherein the roller (27) is positioned so that at least part of the roller lies beneath the surface of the liquid contained in the liquid reservoir.

13. A food heating apparatus according to any preceding claim, including at least one electric heating element to heat the liquid held in the liquid reservoir prior to distribution of the liquid; and optionally wherein a controller is arranged to control the at least one electric heating element; and optionally wherein a thermocouple is placed in contact with the liquid held within the liquid reservoir so as to provide temperature feedback to the controller.

14. A food heating apparatus according to claims 2 to 13, wherein the housing is sealed; and optionally wherein the housing is placed within an outer unit, wherein the housing and outer unit are separated by insulation material; wherein a drain hole preferably passes through the side of the housing and the outer unit and is terminated by a tap positioned on the external side of the outer unit.

15. A method of heating foodstuff comprising the steps of:
positioning a foodstuff in a foodstuff receiving zone;
providing a liquid reservoir for containing a heated liquid and providing a liquid distributing rotary device (9,27);
and being **characterised in that** causing rotation of the liquid distributing rotary device (9,27) to displace heated liquid from the liquid reservoir in the form of droplets of liquid forming a spray towards the foodstuff heating zone.

## Patentansprüche

1. Vorrichtung zum Erwärmen von Speisen, aufweisend:
einen Flüssigkeitsbehälter (22) zum Halten von zu erwärmender Flüssigkeit;
eine Flüssigkeitsverteilungsdrehvorrichtung (9, 27); und
eine Nahrungsmittelaufnahmezone (4);
**dadurch gekennzeichnet, dass** die Flüssigkeitsverteilungsdrehvorrichtung (9, 27) angeordnet ist, um Flüssigkeit aus dem Flüssigkeitsbehälter in der Form von einen Sprühnebel bildenden Flüssigkeitströpfchen zu verdrängen und den Sprühnebel in Richtung der Nahrungsmittelaufnahmezone (4) zu richten.

2. Vorrichtung zum Erwärmen von Speisen nach dem vorangehenden Anspruch, wobei der Flüssigkeitsbehälter, die Flüssigkeitsverteilungsdrehvorrichtung (9, 27) und die Nahrungsmittelaufnahmezone innerhalb eines Gehäuses (2) positioniert sind.

3. Vorrichtung zum Erwärmen von Speisen nach Anspruch 1 oder Anspruch 2, wobei die Nahrungsmittelaufnahmezone vom Flüssigkeitsbehälter beabstandet ist.

4. Vorrichtung zum Erwärmen von Speisen nach Ansprüchen 1 bis 3, wobei die Flüssigkeit, welche in Richtung der Nahrungsmittelaufnahmezone gerichtet ist, mit der Oberfläche der innerhalb der Nahrungsmittelaufnahmezone positionierten Nahrungsmittel in Kontakt kommt.

5. Vorrichtung zum Erwärmen von Speisen nach einem vorangehenden Anspruch, wobei der Flüssigkeitsbehälter geformt ist, um den Kontakt von Flüssigkeit mit den Nahrungsmitteln zu optimieren; und
wobei optional ein Schutzschirm (17) um zumindest einen Teil der peripheren Kante der Flüssigkeitsverteilungsdrehvorrichtung (9, 27) angeordnet ist.

6. Vorrichtung zum Erwärmen von Speisen nach einem vorangehenden Anspruch, wobei die Flüssigkeitsverteilungsdrehvorrichtung ein Rad (9) ist, das um eine mittige Nabe drehbar ist, und
wobei das Rad (9) optional so angeordnet ist, dass zumindest ein Teil des Rads unter der Oberfläche der in dem Flüssigkeitsbehälter enthaltenen Flüssigkeit liegt.

7. Vorrichtung zum Erwärmen von Speisen nach Anspruch 6, wobei das Rad durch einen Motor gedreht wird, welcher magnetisch an das Rad (9) gekoppelt ist, oder wobei das Rad durch einen Motor gedreht wird, welcher mechanisch an das Rad gekoppelt ist.

8. Vorrichtung zum Erwärmen von Speisen nach Ansprüchen 6 bis 7, wobei das Rad eine Scheibe (10) mit zumindest einem Grat (30) aufweist, die angeordnet ist, um ein Sammeln von Flüssigkeit aus dem Flüssigkeitsbehälter zu ermöglichen.

9. Vorrichtung zum Erwärmen von Speisen nach Anspruch 8, wobei der zumindest eine Grat mit der Scheibe (10) durch einen Stumpfabschnitt (12) verbunden ist und der Grat (30) angeordnet ist, um an zwei beabstandeten längslaufenden Stellen gebogen zu werden, um einen ersten und zweiten gegenüberliegenden Abschnitt mit einem dazwischenliegenden Verbindungsabschnitt zu bilden, wobei der Grat an einer weiteren Position an der Basis des ersten gegenüberliegenden Abschnitts gebogen ist, so dass eine Kante des Grats im Wesentlichen einer Seite der Fläche der Scheibe zugewandt ist, und wobei optional die relativen Winkel zwischen den ersten gegenüberliegenden Abschnitten des Grats, des Verbindungsabschnitts des Grats und des zweiten gegenüberliegenden Abschnitts des Grats so bestimmt wurden, dass eine optimale Zerstreuung der Flüssigkeit über die Nahrungsmittel bereitgestellt ist.

10. Vorrichtung zum Erwärmen von Speisen nach Ansprüchen 8-9, wobei acht gleichmäßig beabstandete Grate (30) um den äußeren Umfang der Scheibe des Rads angeordnet sind.

11. Vorrichtung zum Erwärmen von Speisen nach einem der Ansprüche 6 bis 10, wobei das Rad eine Walze (27) mit dem zumindest einen Grat (30) aufweist, der angeordnet ist, um ein Sammeln von Flüssigkeit vom Behälter zu ermöglichen.

12. Vorrichtung zum Erwärmen von Speisen nach Anspruch 1, wobei die Flüssigkeitsverteilungsdrehvorrichtung eine Walze (27) ist, die einen mittigen zylindrischen Kern aufweist, wobei sich zumindest ein Grat (30) in eine nach außen gerichtete Richtung von der Oberfläche des zylindrischen Kerns aus erstreckt; und wobei die Walze (27) optional so positioniert ist, dass zumindest ein Teil der Walze unter der Oberfläche der in dem Flüssigkeitsbehälter enthaltenen Flüssigkeit liegt.

13. Vorrichtung zum Erwärmen von Speisen nach einem vorangehenden Anspruch, beinhaltend zumindest ein elektrisches Heizelement, um die im Flüssigkeitsbehälter gehaltene Flüssigkeit vor der Verteilung der Flüssigkeit zu erwärmen; und wobei optional eine Steuerung angeordnet ist, um das zumindest eine elektrische Heizelement zu steuern; und wobei optional ein Thermoelement in Kontakt mit der im Flüssigkeitsbehälter gehaltenen Flüssigkeit platziert ist, um Temperaturrückmeldung an die Steuerung bereitzustellen.

14. Vorrichtung zum Erwärmen von Speisen nach Ansprüchen 2 bis 13, wobei das Gehäuse versiegelt ist; und wobei optional das Gehäuse innerhalb einer äußeren Einheit platziert ist, wobei das Gehäuse und die äußere Einheit durch Isoliermaterial getrennt sind; wobei ein Abflussloch bevorzugt durch die Seite des Gehäuses und die äußere Einheit geht und in einem Zapfhahn mündet, der an der Außenseite der äußeren Einheit positioniert ist.

15. Verfahren zum Erwärmen von Speisen, aufweisend die Schritte des:
Positionierens eines Nahrungsmittels in einer Nahrungsmittelaufnahmezone;
Bereitstellens eines Flüssigkeitsbehälters zum Halten einer erwärmten Flüssigkeit und Bereitstellens einer Flüssigkeitsverteilungsdrehvorrichtung (9, 27);
und **dadurch gekennzeichnet, dass** eine Flüssigkeitsverteilungsdrehvorrichtung (9, 27) in Drehung versetzt wird, um erwärmte Flüssigkeit aus dem Flüssigkeitsbehälter in Form von einen Sprühnebel bildenden Flüssigkeitströpfchen in Richtung der Nahrungsmittelerwärmungszone zu verdrängen.

## Revendications

1. Appareil de chauffage de nourriture comprenant :
un réservoir (22) à liquide pour contenir un liquide à chauffer ;
un dispositif rotatif (9, 27) de distribution de liquide ; et
une zone de réception (4) d'aliments,
**caractérisé en ce que** le dispositif rotatif (9, 27) de distribution de liquide est agencé pour déplacer le liquide à partir du réservoir à liquide sous forme de gouttelettes de liquide constituant un jet et diriger le jet vers la zone de réception (4) d'aliments.

2. Appareil de chauffage de nourriture selon la revendication précédente, dans lequel le réservoir à liquide, le dispositif rotatif (9, 27) de distribution de liquide et la zone de réception d'aliments sont placés dans un logement (2).

3. Appareil de chauffage de nourriture selon la revendication 1 ou 2, dans lequel la zone de réception d'aliments est séparée à distance du réservoir à liquide.

4. Appareil de chauffage de nourriture selon les revendications 1 à 3, dans lequel le liquide qui est dirigé vers la zone de réception d'aliments vient au contact de la surface des aliments placés à l'intérieur de la zone de réception d'aliments.

5. Appareil de chauffage de nourriture selon l'une quelconque des revendications précédentes, dans lequel le réservoir à liquide est façonné pour optimiser le contact du liquide avec les aliments ; et dans lequel un dispositif de sûreté (17) est facultativement disposé autour d'au moins une partie du bord périphérique du dispositif rotatif (9, 27) de distribution de liquide.

6. Appareil de chauffage de nourriture selon l'une quelconque des revendications précédentes, dans lequel le dispositif rotatif de distribution de liquide est une roue (9) pouvant tourner autour d'un moyeu central et dans lequel la roue (9) est facultativement disposée de telle sorte qu'au moins une partie de la roue se trouve sous la surface du liquide contenu dans le réservoir à liquide.

7. Appareil de chauffage de nourriture selon la revendication 6, dans lequel la roue (9) est entraînée en rotation par un moteur électrique qui est accouplé magnétiquement à la roue ou dans lequel la roue est entraînée en rotation par un moteur qui est accouplé mécaniquement à la roue.

8. Appareil de chauffage de nourriture selon les revendications 6 et 7, dans lequel la roue comprend un disque (10) comportant au moins une ailette (30) agencée pour pouvoir ramasser du liquide dans le réservoir à liquide.

9. Appareil de chauffage de nourriture selon la revendication 8, dans lequel ladite ailette est raccordée au disque (10) par une partie d'embase (12) et l'ailette (30) est agencée pour être pliée en deux endroits séparés sur sa longueur de façon à constituer une première et une seconde partie se faisant face avec entre elles une partie de raccordement, l'ailette étant pliée en un autre endroit à la base de la première partie en face à face de telle sorte qu'un bord de l'ailette fait sensiblement face à un côté du plan du disque, et dans lequel facultativement les angles relatifs entre les premières portions opposées de l'ailette, la partie de raccordement de l'ailette et la seconde partie opposée de l'ailette ont été déterminés de façon à assurer une dispersion optimale du liquide sur les aliments.

10. Appareil de chauffage de nourriture selon les revendications 8 et 9, dans lequel huit ailettes (30) équidistantes sont disposées autour de la périphérie extérieure du disque de la roue.

11. Appareil de chauffage de nourriture selon l'une quelconque des revendications 6 à 10, dans lequel la roue comprend un rouleau (27) comportant au moins une ailette (30) agencée pour pouvoir ramasser du liquide dans le réservoir.

12. Appareil de chauffage de nourriture selon la revendication 1, dans lequel le dispositif rotatif de distribution de liquide est un rouleau (27) comprenant une âme cylindrique centrale dans laquelle au moins une ailette (30) s'étend dans une direction vers l'extérieur à partir de la surface de l'âme cylindrique ; et dans lequel le rouleau (27) est facultativement placé de telle sorte qu'au moins une partie du rouleau se trouve sous la surface du liquide contenu dans le réservoir à liquide.

13. Appareil de chauffage de nourriture selon l'une quelconque des revendications précédentes, comportant au moins un élément de chauffage électrique pour chauffer le liquide contenu dans le réservoir à liquide avant la distribution du liquide ; et en option, dans lequel un dispositif de commande est prévu pour commander l'au moins un élément de chauffage électrique ; et en option dans lequel un thermocouple est placé en contact avec le liquide contenu dans le réservoir à liquide de manière à fournir un signal de retour de température au dispositif de commande.

14. Appareil de chauffage de nourriture selon les revendications 2 à 13, dans lequel le logement est scellé ; et en option dans lequel le logement est placé à l'intérieur d'une unité extérieure, le logement et l'unité extérieure étant séparés par un matériau isolant ; dans lequel un orifice de drainage traverse de préférence le côté du logement et de l'unité extérieure et se termine par un robinet disposé sur le côté extérieur de l'unité extérieure.

15. Procédé de chauffage d'aliments comprenant les étapes suivantes :
placer un aliment dans une zone de réception d'aliments,
fournir un réservoir à liquide destiné à contenir un liquide chauffé et fournir un dispositif rotatif (9, 27) de distribution de liquide ;
et **caractérisé par** le fait de provoquer la rotation du dispositif rotatif (9, 27) de distribution de liquide pour déplacer le liquide chauffé du réservoir à liquide sous la forme de gouttelettes de liquide constituant un jet vers la zone de chauffage d'aliments.
